(19) Europäisches Patentamt
European Patent Office
Office européen des brevets

(11) **EP 2 746 065 B1**

(12) **EUROPEAN PATENT SPECIFICATION**

(45) Date of publication and mention
of the grant of the patent:
**03.08.2016 Bulletin 2016/31**

(51) Int Cl.:
***B60C 9/26*** *(2006.01)*

(21) Application number: **13197331.5**

(22) Date of filing: **16.12.2013**

(54) **Pneumatic tire with geodesic belt**

Luftreifen mit geodätischem Gürtel

Pneu avec renforcement de sommet géodésique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2012 US 201261739933 P
20.12.2012 US 201261740204 P
25.02.2013 US 201313775637
11.03.2013 US 201313793104**

(43) Date of publication of application:
**25.06.2014 Bulletin 2014/26**

(73) Proprietor: **The Goodyear Tire & Rubber Company
Akron, Ohio 44316 (US)**

(72) Inventors:
• **Ueyoko, Kiyoshi
Copley, OH Ohio 44321 (US)**

• **Cabrera, Luis Antonio
Hartville, OH Ohio 44632 (US)**
• **Yerashunas, Loyda Mercedes
NW N. Canton, OH Ohio 44720 (US)**
• **Slivka, John Joseph
Danville, VA Virginia 24541 (US)**
• **Hart, James Michael
Akron, OH Ohio 44319 (US)**

(74) Representative: **Kutsch, Bernd
Goodyear S.A.
Patent Department
Avenue Gordon Smith
7750 Colmar-Berg (LU)**

(56) References cited:
**GB-A- 810 425    US-A- 3 024 828**

**Description**

Field of the Invention

The invention is directed to the field of tire manufacturing and tire construction and in particular to a tire having a geodesic belt.

Background of the Invention

It is known in the art to utilize zigzag belts in aircraft tires and truck tires. Zigzag belts are typically continuously woven from one belt edge to the other belt edge at a constant angle, with a turn around at the belt edges. A zigzag belt results in two layers of cord interwoven together with no cut belt edges. However, depending upon the tire size and other factors, the angle of the zigzag belt in the crown area is typically 10-14 degrees, with the turnaround angle at the belt edges typically around 90 degrees. It is however desired to have a higher angle at the centerline in order to improve wear, typically in the range of 15-45 degrees.

A geodesic belt construction has the belt cords arranged on a geodesic line on the tire's curved surface. On a curved surface the geodesic path is the least curvature or shortest distance between two points on a curved surface. A true geodesic path follows the special mathematical law: $\rho \cos\alpha$ = constant. A true geodesic belt has the advantage of a higher crown angle at the centerline as compared to the zigzag belt. The true geodesic belt also has the advantage of no shear stress, because it is the minimum path. Unlike the zigzag belt construction, the geodesic belt angle continuously varies such that the angle is high at the centerline, typically around 45 degrees, and is 180 degrees at the belt edges. Both the zigzag belt and the geodesic belt have an issue at the belt edges of accumulation. It is thus desired to provide an improved belt design which modifies the geodesic path to overcome the disadvantages of the geodesic belt. Thus for the foregoing reasons, it is desired to provide an tire having a belt with a modified geodesic path without the above described disadvantages.

US-A- 3,024,828 describes a tire in accordance with the preamble of claim 1.

Summary of the Inventions

The invention relates to a pneumatic tire in accordance with claim 1. Dependent claims refer to preferred embodiments of the invention.

In one aspect of the invention, a pneumatic tire having a carcass and a belt structure is disclosed, the belt structure comprising first belt layer having cords arranged at an angle of 5 degrees or less with respect to the midcircumferential plane of the tire and a geodesic belt structure, wherein the geodesic belt structure is formed in a three dimensional path extending in alternation to turnaround points at each lateral edge of the geodesic belt structure, and wherein the geodesic belt structure is wider than the first belt layer and is located radially outward of the first belt layer.

In another aspect, a method of forming a geodesic belt structure for a tire is disclosed. The method comprises the steps of: a) selecting a desired centerline angle $\theta s$; b) calculating a three dimensional minimal distance path L from one belt edge (-W/2) to the other belt structure edge (W/2) and from $\psi=0$ to $\psi=AG$, where AG=NR/NG, where NR is the number of revolutions to form NG geolines, and where NG is the number of geolines in a set; c) calculating a centerline angle $\theta$; d) modifying the angle $\psi$ if $\theta$ is not within a predetermined range of $\theta s$; and e) repeating steps b through d until $\theta$ is within the predetermined range of $\theta s$.

In one aspect of the invention, the tire may further comprise a third belt layer located radially outward of the first belt layer or located radially outward of the first belt layer and the second belt layer.

In yet another aspect of the invention, the third belt layer is preferably axially wider than the first belt layer or is preferably axially wider than the first belt layer and the second belt.

In yet another aspect of the invention, the tire may further comprise a fourth belt layer located radially outward of the third belt layer. The fourth belt layer is preferably axially wider than the third belt layer.

In yet another aspect of the invention, the tire may comprise a first geodesic belt structure and a second geodesic belt structure wherein the first geodesic belt structure is axially wider than the second geodesic belt structure and/or wherein the first geodesic belt structure is located radially adjacent to the second geodesic belt structure.

In yet another aspect of the invention, one or more of the carcass plies may comprise cords made of nylon.

In yet another aspect of the invention, the angle at the centerline of the geodesic belt may be modified and the three dimensional minimal distance path L from one belt edge to the other belt edge may be calculated using the following equation: L= $\Sigma$(SQRT($X^2 + Y^2 + Z^2$)), for $\psi$ = 0 to AG, where Z =R*$\delta\psi$.

In yet another aspect of the invention, the method of forming a geodesic belt structure may include: If $\theta$ equals $\theta s$ +/-$\Delta$, then determining a factor K=*[360\*NR+360/NS])/NR*.

In yet another aspect, in the method of forming a geodesic belt structure, all the $\psi$ data points may be multiplied

by factor k, $\psi' = k*\psi$.

In another aspect, a method of forming a geodesic belt for a tire is disclosed, the method comprising the steps of: selecting a desired centerline angle $\theta s$, calculating a three dimensional minimal distance path L from one belt edge to the other belt edge using the following equation:

a. L= $\Sigma$(SQRT($X^2$ +$Y^2$+$Z^2$)), for $\psi$ = 0 to AG, where Z =$R*\delta\psi$;
b. calculating $\theta$ at centerline of path;
c. determining a data set of points of the minimum path;
d. incrementing NG if $\theta \neq \theta s$ and then calculating a new AG=NR/NG;
e. repeating steps b through d until $\theta$ equals $\theta s$ +/-$\Delta$.

Definitions

"Axial" and "axially" means the lines or directions that are parallel to the axis of rotation of the tire.
"Radial" and "radially" mean directions radially toward or away from the axis of rotation of the tire.

Brief Description of the Drawings

The invention will be described by way of example and with reference to the accompanying drawings in which:

Figure 1 is a cross-sectional view of one half of a symmetrical aircraft tire;
Figure 2 is a perspective view of a tire illustrating an ideal geodesic line 3 on the outer surface;
Figures 3a, 3b are front views of a tire with a modified geodesic belt;
Figure 4 is a schematic view of a modified geoline from $\psi$=0 to $\psi$=360 degrees;
Figure 5 is a side view simplified schematic of a tire building drum illustrating angle of drum rotation: $\psi$=0 to $\psi$=AG;
Figure 6 is a process flow chart showing method steps of the invention;
Figure 7 illustrates the minimum path L in rectangular coordinates; and
Figure 8 is a cross-sectional view of one half of a symmetrical belt package.

Detailed Description of Example Embodiments of the Invention

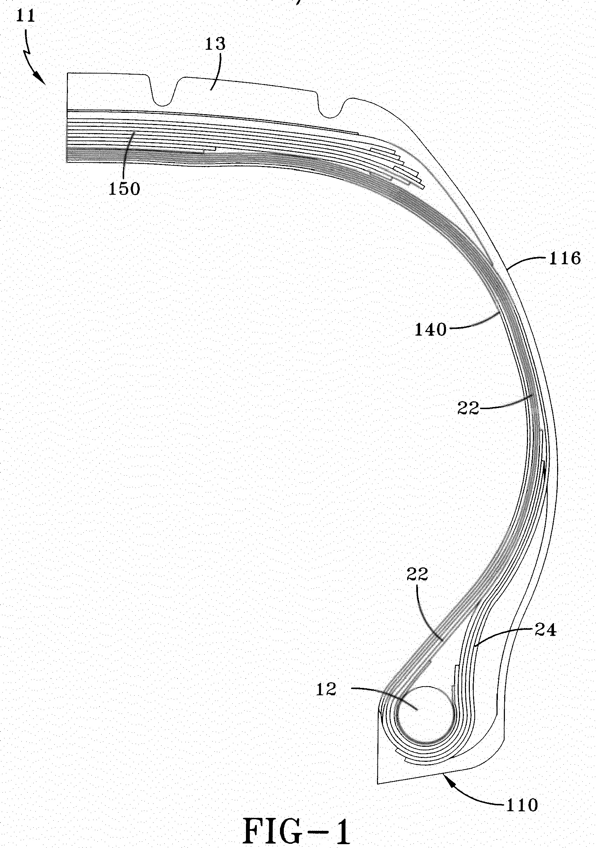

Figure 1 illustrates a cross-sectional view of one half of a radial aircraft tire 11 of the present invention. The tire is symmetrical about the mid-circumferential plane so that only one half is illustrated. As shown, the aircraft tire 11 comprises a pair of bead portions 110 each containing a bead core 12 embedded therein. One example of a bead core suitable for use in an aircraft tire is shown in US-B-6,571,847. The bead core 12 preferably has an aluminum, aluminum alloy or other light weight alloy in the center portion surrounded by a plurality of steel sheath wires (not shown). A person skilled in the art may appreciate that other bead cores may also be utilized. The invention may also used with tires other than aircraft tires.

The aircraft tire further comprises a sidewall portion 116 extending substantially outward from each of the bead portions 110 in the radial direction of the tire, and a tread portion 13 extending between the radially outer ends of the sidewall portions 116. Furthermore, the tire 11 is reinforced with a carcass 22 toroidally extending from one of the bead portions 110 to the other bead portion 110. The carcass comprises one or more inner carcass plies 22 and one or more outer carcass plies 24, preferably oriented in the radial direction. Among these carcass plies 22, 24, typically four inner plies 22 are wound around the bead core 12 from inside of the tire toward outside thereof to form turnup portions, while typically two outer plies 24 are extended downward to the bead core 12 along the outside of the turnup portion of the inner carcass ply 22. Each of these carcass plies 22, 24 may comprise any suitable cord, typically nylon cords such as nylon-6,6 cords extending substantially perpendicular to an equatorial plane EP of the tire (i.e., extending in the radial direction of the tire). Preferably the nylon cords have an 1890 denier/2/2 or 1890 denier/3 construction. One or more of the carcass plies 22, 24 may also comprise an aramid and nylon cord structure, for example, a hybrid cord, a high energy cord or a merged cord. Examples of suitable cords are described in US-A-4,893,665, US-A-4,155,394 or US-A-6,799,618.

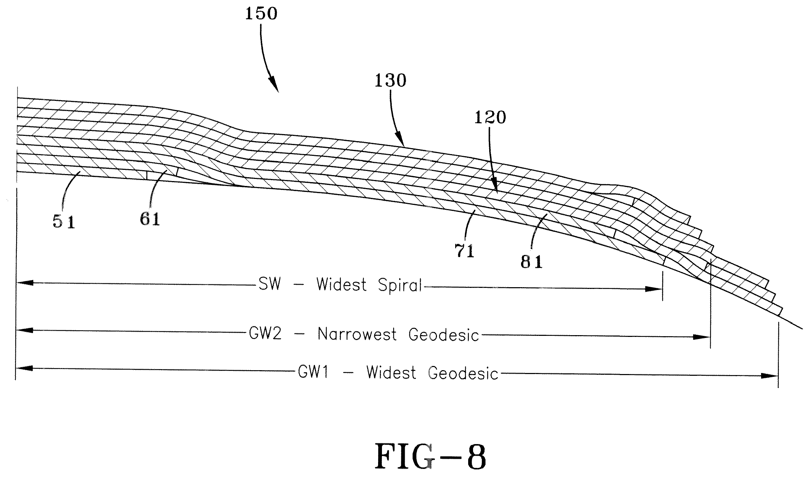

The aircraft tire 11 further comprises a belt package or belt structure 150 arranged between the carcass 22 and the tread rubber 13. Figure 8 illustrates a first embodiment of one half of a belt package 150 suitable for use in the aircraft tire. The belt package 150 is symmetrical about the mid-circumferential plane so that only one half of the belt package is illustrated. The belt package 150 as shown comprises a first belt layer 51 located adjacent the carcass. The first belt layer 51 is preferably formed of cords having an angle of 5 degrees or less with respect to the mid-circumferential plane. Preferably, the first belt layer 51 is formed of a rubberized strip of two or more cords made by spirally or helically winding the cords at an angle of plus or minus 5 degrees or less relative to the circumferential direction. The first belt layer 51 is preferably the narrowest belt structure of the belt package 150 and has preferably a width in the range of from 13% to 100% of the rim width (width between flanges), and more preferably in the range of from 20% to 70% of the rim width (width between flanges), and most preferably in the range of from 30% to 42% of the rim width (width between flanges).

The belt package 150 further comprises a second belt layer 61 located radially outward of the first belt layer 51. The second belt layer 61 is preferably formed of cords having an angle of 5 degrees or less with respect to the mid-circumferential plane. Preferably, the second belt layer 61 is formed of a rubberized strip of two or more cords made by spirally or helically winding the cords at an angle of plus or minus 5 degrees or less relative to the circumferential direction. The first belt 51 is the radially innermost belt. The first belt 51 is preferably the narrowest belt of all the belts. The second belt 61 is located radially outward of the first belt, and has preferably a slightly larger width than the first belt 51. The embodiment optionally further includes a third 71 and fourth belt 81 preferably having a low angle of 5 degrees or less with respect to the circumferential plane. The third and fourth belts 71, 81 are preferably helically wound. The third belt 71 is located radially outward of the second belt 61, and is preferably substantially wider than the first and second belts 51, 61. The third belt 71 is preferably the widest belt of the first, second and fourth belts 51, 61, 81. The fourth belt 81 is located radially outward of the third belt 71, and is preferably the widest of the low angle belts 51, 61, 71. In one embodiment, the fourth belt 81 has a width slightly less than the third belt 71. The embodiment further includes a first 120 and second 130 geodesic belt structure that are both located radially outward of the first through fourth belts. The first geodesic belt structure 120 is preferably located radially outward of the fourth belt 81 and preferably has the widest width GW1 all of the belts 51, 61, 71, 81, 130. The ratio of the geodesic belt width BWs to the narrowest cut belt width BWs is as follows:

$$(1) \quad 0.3 \, < \, \text{BWs/BWg} \, < \, 0.6, \text{ and more preferably in the range of}$$
$$0.3 < \, \text{BWs/BWg} \, < \, 0.5$$

In the above embodiment, it is additionally preferred that the ply be made of nylon and that the belt structure 150 be made of an aramid/nylon blend, such that the ply cord % elongation is greater than the belt cord % elongation at break. It is additionally preferred that the maximum belt cord elongation at break be less than 18%.

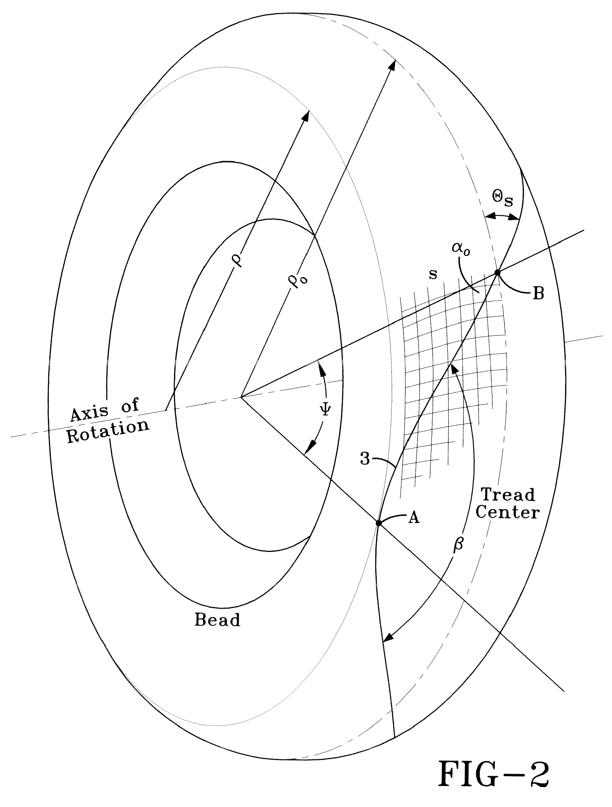

The belt package 150 has at least one geodesic belt 120, 130 made as described in more detail, below. It is helpful to understand that a true geodesic line on a curved surface is the shortest three dimensional distance between two points in space or the least curvature. Figure 2 illustrates line 3 which illustrates a belt having a true geodesic line. Note that the cord is tangent to the belt edge at point A. A true geodesic ply pattern follows the mathematical equation exactly: $\rho \cos \alpha = \rho_0 \cos \alpha_0$, wherein $\rho$ is the radial distance from the axis of rotation to the cord at a given location; $\alpha$ is the angle of the cord at a given location with respect to the mid-circumferential plane; and $\rho$ is the radial distance from the axis of rotation of the core to the crown, and $\rho_0, \alpha_0$ is the radius and angle at the midcircumferential plane.

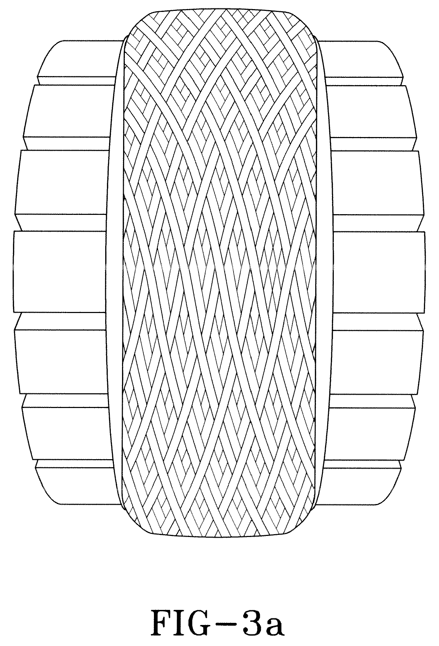

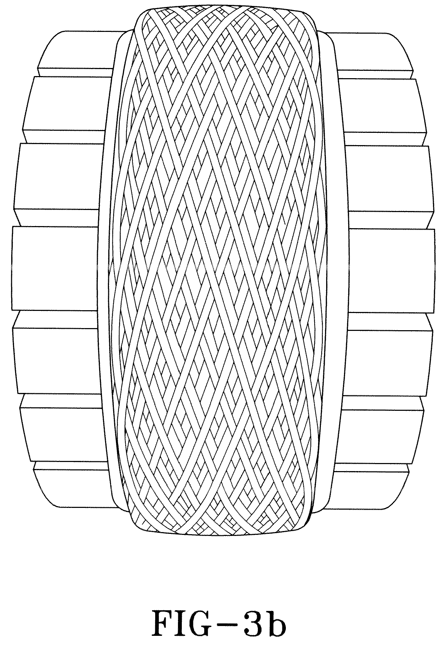

Figures 3a and 3b each illustrate a front view of a tire on a belt making machine constructed with a modified geodesic belt 120, 130 of the present invention.

The angle of the belt at the edges is slightly less than 180 degrees. Each belt looks different due to the selection of different parameters such as desired centerline angle θs. The geodesic belt is applied using a belt applier on a rotating B&T drum. The belt applier utilizes a mechanical arm applier (not shown) that translates in an axial direction from one belt edge shoulder to the other belt edge shoulder. A computer controller controls the arm position (x axis) coordinated with the speed of the B&T drum (ψ). The modified geodesic belt path 120, 130 is determined from the following steps.

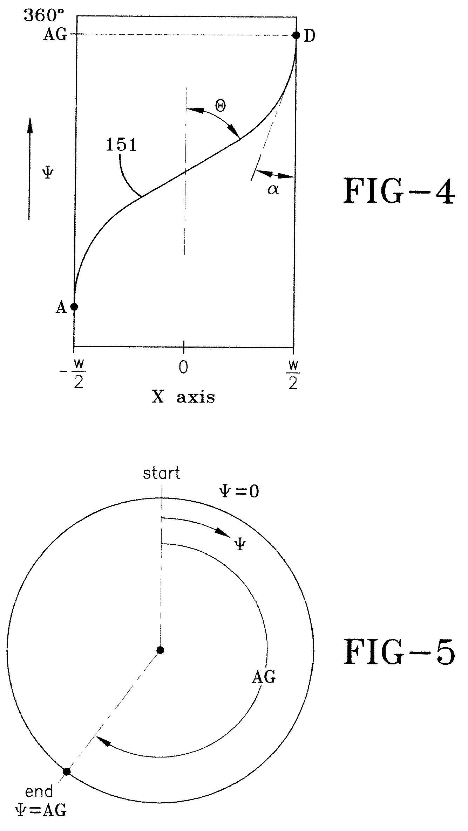

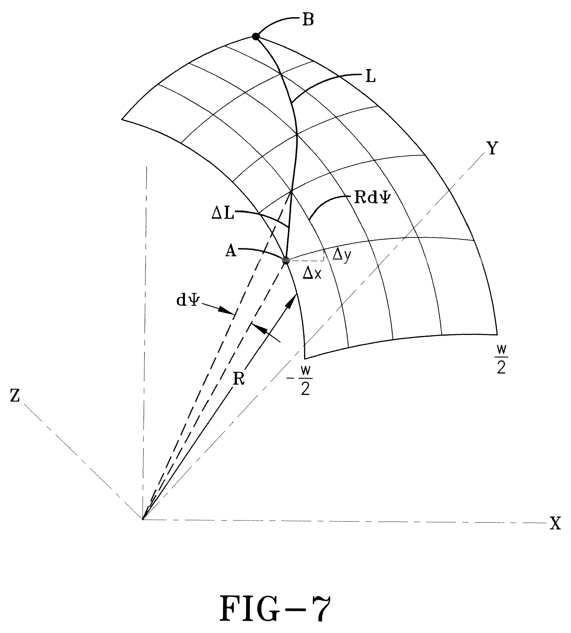

Figures 4 and 7 illustrate a modified geodesic path 151 according to the teachings of the invention. Figure 4 illustrates the path for 1 revolution from 0 degrees to ψ=360 degrees. For a true geodesic path, at each belt edge (W/2) the angle $\alpha$ = 0 degrees so that the cord is tangent at the belt edge. The modified geodesic path of the invention deviates from an angle of zero at the belt edges in order to avoid excessive build up at the belt edges. The modified geodesic path also deviates from the angle at the centerline, so that a desired centerline angle θs may be obtained. For purposes of illustration, for an exemplary tire size, it is known that there are 20 geolines formed in 9 revolutions. Thus a geoline is formed in 0.45 revolutions for a true geodesic path. At each belt edge, the geoline is tangent to the belt edges ($\alpha$ =0), and the belt angle at the centerline is about 15.5 degrees. A geoline is defined as the three dimensional minimum path from one belt edge (point A on Figure 4) to the opposite belt edge (point D, Figure 4). Thus a belt would require multiple geolines in order to completely cover the tire belt surface, typically 80 geolines.

AG is defined as the change in angle ψ from the starting point A to the ending point D of the geoline as shown in Figure 5. AG is set to have an initial value by specifying an initial NR value of 20, and an NG value of 30. The value of NG, AG will change as the iterative series of calculations are performed.

AG= 360*NR/NG,
Where NR = number of revolutions to form NG geolines

NG=number of geolines in the set, all sets are equal

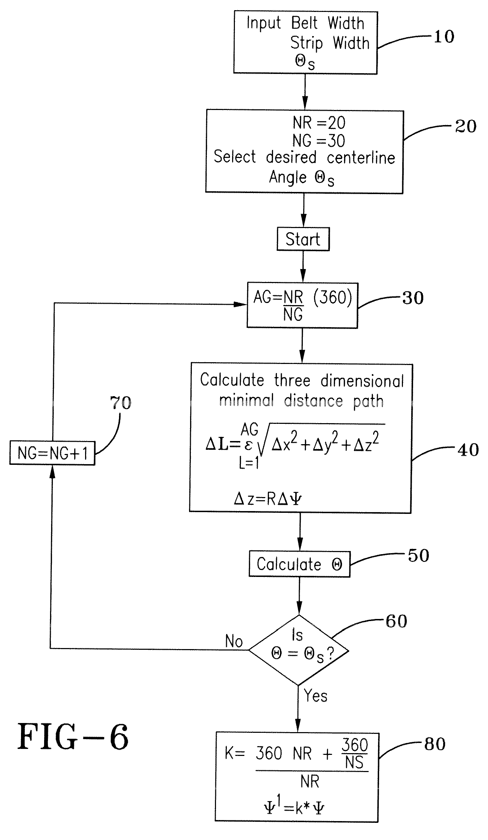

Figure 6 illustrates the flow chart for outlining the steps to calculate a modified geoline for a belt. For step 10, the belt width, strip width and desired centerline angle $\theta s$ are input. For step 20, $\theta s$ is set to the input value $\theta s$, and NR is set to 20, NG is set to 30. These values were determined from experience.

NR = number of revolutions in one set of geolines
NG=number of geolines in a set that have a starting point and ending point of zero degrees $\psi$

For step 30, AG is determined from the following calculation:

$$AG=360*NR/NG,$$

In step 40, the three dimensional minimum distance path L is determined for a geoline from the equation below, over the range from, X= -W/2 to W/2, $\psi$=0 to AG

$$L= \Sigma(SQRT(X^2 +Y^2+Z^2)), \text{ for } i = 1 \text{ to } k$$

Where $Z =R*\delta\psi$

In step 50, the angle $\theta$ is calculated at the centerline and compared with the input value $\theta s$. For step 60, if $\theta = \theta s$ is not true, then step 70 is performed wherein NG is increased by the following formula:

$$NG = NG+\Delta NG$$

Steps 30-70 are repeated until $\theta = \theta s$.

Once $\theta = \theta s$, then the remaining geolines for the set are determined using equations from step 40. Alternatively, once a geoline is calculated, the other remaining geolines can be determined by adding AG to the $\psi$ values of the geoline data set.

A first data set is now known, wherein NR=20, and NG=70 was determined in this example. The first set of data points describing the minimal path are known in X, Y, $\psi$ coordinates. In order to fill the belt surface sufficiently, several sets are needed, typically in the range of 2 to 5 sets. Assume in this example four data sets are needed. In order to determine the starting point of sets two through four, the value K is computed from the equation below.

For four data sets, the first data set is preferably modified by a factor K in order to completely cover the belt area by the cords and to ensure that the second data set begins where the first data set ends. For four specified data sets, the ending point of the first data set will occur precisely at $\psi$=90 degrees. Thus our first data set will start at $\psi$=0 and end at $\psi$=90 degrees. Set two will start at 90 degrees and end at 180 degrees. Set three will start at 180 degrees and end at 270 degrees. Set four will start at 270 degrees and end at 0/360 degrees.

$$K= [360*NR+360/NS])/NR$$

NS is number of data sets to be generated, in the example 4.

In order to fill the belt, it is desired to have at least 4 data sets generated.

For the first data set, $\psi'=K*\psi$

Thus, the first data set has 70 geolines formed in 20 revolutions, wherein the data set begins at $\psi$=0 and ends at $\psi$=90. K is a multiplier which slightly stretches the data set to end precisely at an even interval such as 90 degrees. The second data set begins at $\psi$=90 and ends at $\psi$=180. This data set can be derived from the first data set by adding $\psi=\psi + 90$, while the other data values stay the same. The third data set begins at $\psi$=180 and ends at $\psi$=270 degrees. This data set can be derived from the first data set by adding $\psi=\psi + 180$, while the other data values stay the same. The fourth data set begins at $\psi$=270 degrees and ends at $\psi$=360 degrees. This data set can be derived from the first data set by adding $\psi=\psi + 270$, while the other data values stay the same.

Cord Construction

The cord may comprise one or more rubber coated cords which may be polyester, nylon, rayon, steel, flexten or aramid.

**Claims**

1.  A pneumatic tire having a carcass (22, 24) and a belt structure (150), the belt structure (150) comprising first belt layer (51) and a geodesic belt structure (120, 130), wherein the geodesic belt structure (120, 130) is formed in a three dimensional path (151) extending in alternation to turnaround points (A, D) at each lateral edge (-W/2, W/2) of the geodesic belt structure (120, 130), **characterized in that** the geodesic belt structure (120, 130) is wider than the first belt layer (51) and is located radially outward of the first belt layer (51), and **in that** the first belt layer (51) has cords arranged at an angle of 5 degrees or less with respect to the midcircumferential plane of the tire (11).

2.  The pneumatic tire of claim 1 having a second belt layer (61) having cords arranged at an angle of 5 degrees or less with respect to the midcircumferential plane of the tire (11).

3.  The pneumatic tire of claim 2 wherein the second belt layer (61) is axially wider than the first belt layer (51) and/or wherein the second belt layer (61) is radially outward of the first belt layer (51).

4.  The pneumatic tire of at least one of the previous claims wherein the geodesic belt structure (120, 130) is the axially widest belt layer of the belt structure (150) and/or wherein the geodesic belt structure (120, 130) is the radially outermost belt layer of the belt structure (150).

5.  The pneumatic tire of at least one of the previous claims wherein the geodesic belt structure (120, 130) has a centerline angle in the range of from 15 to 30 degrees.

6.  The pneumatic tire of at least one of the previous claims wherein the geodesic belt structure (120, 130) comprises a first geodesic belt structure (120) and a second geodesic belt structure (130), wherein the first geodesic belt structure (120) is located radially inward of the second geodesic belt structure (130).

7.  The pneumatic tire of at least one of the previous claims wherein the belt structure (150) is formed from a continuous strip.

8.  The pneumatic tire of at least one of the previous claims wherein the belt structure (150) is formed from a nylon/aramid strip material, a nylon material or an aramid material.

9.  The pneumatic tire of at least one of the previous claims wherein at least one belt layer (51, 61, 71, 81) has cords having a percent elongation at break less than 24% and a break strength greater than 400N.

10. The pneumatic tire of at least one of the previous claims wherein the carcass ply cords have a greater elongation at break than the belt structure cords.

11. The pneumatic tire of at least one of the previous claims wherein the tire (11) is an aircraft tire.

**Patentansprüche**

1.  Luftreifen mit einer Karkasse (22, 24) und einer Gürtelstruktur (150), wobei die Gürtelstruktur (150) eine erste Gürtellage (51) und eine geodätische Gürtelstruktur (120, 130) umfasst, wobei die geodätische Gürtelstruktur (120, 130) in einem dreidimensionalen Pfad (151) ausgebildet ist, der sich alternierend zu Wendepunkten (A, D) an jedem seitlichen Rand (-W/2, W/2) der geodätischen Gürtelstruktur (120, 130) erstreckt, **dadurch gekennzeichnet, dass** die geodätische Gürtelstruktur (120, 130) breiter als die erste Gürtellage (51) ist und sich radial auswärts von der ersten Gürtellage (51) befindet, und dass die erste Gürtellage (51) Korde aufweist, die in einem Winkel von 5 Grad oder weniger in Bezug auf die Mittelumfangsebene des Reifens (11) angeordnet sind.

2.  Luftreifen nach Anspruch 1, der eine zweite Gürtellage (61) aufweist, die Korde aufweist, die in einem Winkel von 5 Grad oder weniger in Bezug auf die Mittelumfangsebene des Reifens (11) angeordnet sind.

3. Luftreifen nach Anspruch 2, wobei die zweite Gürtellage (61) axial breiter als die erste Gürtellage (51) ist und/oder wobei die zweite Gürtellage (61) sich radial auswärts von der ersten Gürtellage (51) befindet.

4. Luftreifen nach mindestens einem der vorhergehenden Ansprüche, wobei die geodätische Gürtelstruktur (120, 130) die axial breiteste Gürtellage der Gürtelstruktur (150) ist und/oder wobei die geodätische Gürtelstruktur (120, 130) die radial äußerste Gürtellage der Gürtelstruktur (150) ist.

5. Luftreifen nach mindestens einem der vorhergehenden Ansprüche, wobei die geodätische Gürtelstruktur (120, 130) einen Mittellinienwinkel im Bereich von 15 bis 30 Grad aufweist.

6. Luftreifen nach mindestens einem der vorhergehenden Ansprüche, wobei die geodätische Gürtelstruktur (120, 130) eine erste geodätische Gürtelstruktur (120) und eine zweite geodätische Gürtelstruktur (130) umfasst, wobei die erste geodätische Gürtelstruktur (120) sich radial einwärts von der zweiten geodätischen Gürtelstruktur (130) befindet.

7. Luftreifen nach mindestens einem der vorhergehenden Ansprüche, wobei die Gürtelstruktur (150) aus einem kontinuierlichen Streifen gebildet ist.

8. Luftreifen nach mindestens einem der vorhergehenden Ansprüche, wobei die Gürtelstruktur (150) aus einem Nylon-Aramid-Streifenmaterial, einem Nylonmaterial oder einem Aramidmaterial gebildet ist.

9. Luftreifen nach mindestens einem der vorhergehenden Ansprüche, wobei mindestens eine Gürtellage (51, 61, 71, 81) Korde mit einem Bruchdehnungsprozentsatz von weniger als 24% und einer Bruchfestigkeit von größer als 400N aufweist.

10. Luftreifen nach mindestens einem der vorhergehenden Ansprüche, wobei die Karkassenlagenkorde eine größere Bruchdehnung als die Gürtelstrukturkorde aufweisen.

11. Luftreifen nach mindestens einem der vorhergehenden Ansprüche, wobei der Reifen (11) ein Flugzeugreifen ist.

**Revendications**

1. Bandage pneumatique possédant une carcasse (22, 24) et une structure de ceintures (150), la structure de ceintures (150) comprenant une première couche de ceinture (51) et une structure de ceintures géodésiques (120, 130), la structure de ceintures géodésiques (120, 130) étant réalisée sous la forme d'une voie en trois dimensions (151) s'étendant en alternance jusqu'à des points de retournement (A, D) à chaque bord latéral (-W/2, W/2) de la structure de ceintures géodésiques (120, 130), **caractérisé en ce que** la structure de ceintures géodésiques (120, 130) est plus large que la première couche de ceinture (51) et est disposée en direction radiale à l'extérieur de la première couche de ceinture (51), et **en ce que** la première couche de ceinture (51) possède des câblés qui sont disposés en formant un angle de 5° ou moins par rapport au plan circonférentiel médian du bandage pneumatique (11).

2. Bandage pneumatique selon la revendication 1, possédant une deuxième couche de ceinture (61) dont les câblés sont disposés en formant un angle de 5° ou moins par rapport au plan circonférentiel médian du bandage pneumatique (11).

3. Bandage pneumatique selon la revendication 1, dans lequel la deuxième couche de ceinture (61) est plus large en direction axiale de la première couche de ceinture (51) et/ou dans lequel la deuxième couche de ceinture (61) est disposée en direction radiale à l'extérieur de la première couche de ceinture (51).

4. Bandage pneumatique selon au moins une des revendications précédentes, dans lequel la structure de ceintures géodésiques (120, 130) représente la couche de ceinture la plus large en direction axiale de la structure de ceintures (150) et/ou dans lequel la structure de ceintures géodésiques (120, 130) représente la couche de ceinture la plus externe en direction radiale de la structure de ceintures (150).

5. Bandage pneumatique selon au moins une des revendications précédentes, dans lequel la structure de ceintures géodésiques (120, 130) forme un angle sur une ligne médiane dans la plage de 15 à 30°.

6. Bandage pneumatique selon au moins une des revendications précédentes, dans lequel la structure de ceintures géodésiques (120, 130) comprend une première structure de ceintures géodésiques (120) et une deuxième structure de ceintures géodésiques (130), la première structure de ceintures géodésiques (120) étant disposée en direction radiale à l'extérieur de la deuxième structure de ceintures géodésiques (130).

7. Bandage pneumatique selon au moins une des revendications précédentes, dans lequel la structure de ceintures (150) est réalisée à partir d'une bande en continu.

8. Bandage pneumatique selon au moins une des revendications précédentes, dans lequel la structure de ceintures (150) est réalisée à partir d'une matière en forme de bande à base de nylon/aramide, d'une matière à base de nylon ou d'une matière à base d'aramide.

9. Bandage pneumatique selon au moins une des revendications précédentes, dans lequel au moins une couche de ceintures (51, 61, 71, 81) possède des câblés dont l'allongement à la rupture en pour cent est inférieur à 21 % et dont la résistance à la rupture est supérieure à 400N.

10. Bandage pneumatique selon au moins une des revendications précédentes, dans lequel les câblés de la nappe de carcasse possèdent un allongement à la culture supérieur à celui des câblés de la structure de ceintures.

11. Bandage pneumatique selon au moins une des revendications précédentes, dans lequel le bandage pneumatique (11) est un bandage pneumatique pour aéroplane.

FIG-1

FIG-2

FIG-3a

FIG-3b

FIG-4

FIG-5

Input Belt Width
Strip Width
$\Theta_S$
— 10

NR = 20
NG = 30
Select desired centerline
Angle $\Theta_S$
— 20

Start

$AG = \dfrac{NR}{NG}(360)$ — 30

Calculate three dimensional
minimal distance path

$$\Delta L = \overset{AG}{\underset{L=1}{\varepsilon}} \sqrt{\Delta x^2 + \Delta y^2 + \Delta z^2}$$

$\Delta z = R\Delta \Psi$
— 40

70

NG = NG+1

Calculate $\Theta$ — 50

No    Is
$\Theta = \Theta_S$? — 60

Yes

FIG-6

$K = \dfrac{360\ NR + \dfrac{360}{NS}}{NR}$ — 80

$\Psi^1 = k * \Psi$

FIG-7

FIG—8

**REFERENCES CITED IN THE DESCRIPTION**

**Patent documents cited in the description**

- US 3024828 A
- US 6571847 B
- US 4893665 A
- US 4155394 A
- US 6799618 A